# EUROPEAN PATENT APPLICATION

(11) **EP 2 945 124 A1**
(43) Date of publication of application: **18.11.2015**
(21) Application number: 15167234.2
(22) Date of filing: 12.05.2015
(51) Int. Cl.: G06T 11/00, G06F 3/14

(54) **BACKGROUND DISPLAY METHOD, BACKGROUND DISPLAY DEVICE AND ELECTRONIC DEVICE**

(30) Priority: 15.05.2014 CN 201410206618
(71) Applicant: Xiaomi Inc., Beijing 100085 (CN)
(72) Inventor: Wang, Wenlin, 100085 BEIJING (CN); Han, Wei, 100085 BEIJING (CN); Xu, Meng, 100085 BEIJING (CN)
(74) Representative: Fontenelle, Sandrine

(57) **Abstract**

The disclosure relates to a background display method, device and electronic device, belonging to the field of electronic display. The method includes: determining a position of a target element in a grid view according to attribute information of the target element and attribute information of adjacent elements; determining background pattern information corresponding to the target element according to the position of the target element in the grid view, and displaying a background pattern. In the disclosure, the problem in the related art that the developer needs to designate corresponding background pattern for each element in the grid view and thus consumes much human labor is solved, the developing period is shortened, the developing and maintaining cost is reduced while an aesthetic and vivid interface is obtained.

## Description

### TECHNICAL FIELD

The present disclosure generally relates to the field of electronic display and, more particularly, to a background display method, a background display device and an electronic device.

### BACKGROUND

In the field of electronic display, elements are usually displayed in grid view, such as GridView display. In the grid view, each element may be arranged horizontally or vertically, which forms grid-type two-dimensional element distribution interface. A plurality of elements of the grid view may be displayed in an interface at the same time, but due to the large amount of elements, limitation of screen size, interface aesthetics and other reasons, the display interface may also display a part of the elements of the grid view, other elements may be displayed according to the user's command when turning page or sliding.

The common display method is that each element in the grid view realizes the same background pattern, but for the aesthetics of the display interface, each element in the grid view may be provided with a background pattern. If the displayed element in the grid view is a virtual key, the background pattern of the virtual key is set by a developer, who often sets the same background pattern for each virtual key in the same grid view. In the related technology, to obtain a more vivid interface, the developer may further designate, in program codes, different background patterns for each virtual key. When displaying the interface, the background pattern designated for the virtual key in the interface is directly searched and displayed.

In the process of realizing the disclosure, it is found that the related technology has at least the disadvantages hereinbelow.

In the related technology, to obtain a more vivid and aesthetic interface, the developer needs to designate corresponding background patterns for each element in the grid view. When there are a large number of elements in the grid view, much human labor is consumed, the developing period is prolonged, and the developing and maintaining cost is increased.

### SUMMARY

In the related technology, to obtain a more vivid and aesthetic interface, the developer needs to designate corresponding background patterns for each element in the grid view, which consumes much human labor. In order to solve the problem above, embodiments of the present disclosure provide a background display method, a background display device and an electronic device. The disclosure includes the technology solutions as follows.

In a first aspect, a background display method is provided, the method including:
determining a position of a target element in a grid view according to attribute information of the target element and attribute information of adjacent elements, the target element being one of elements displayed according to the grid view;
searching a background pattern configuration file according to the position of the target element in the grid view, and determining background pattern information corresponding to the target element; and
displaying a background pattern of the target element according to the background pattern information.

Optionally, the attribute information includes type and background label, the background label is used to indicate the background pattern configuration file corresponding to each element and the step of determining a position of a target element in a grid view according to attribute information of the target element and attribute information of adjacent elements includes:
determining a first correlation between the target element and a first element and a second correlation between the target element and a second element, wherein the first and second correlations include the same or different of the attribute information, the first element is the element at the left side of the target element and nearest to the target element in the elements displayed according to the grid view, the second element is the element at the right side of the target element and nearest to the target element in the elements displayed according to the grid view;
searching the corresponding relation between the first and second correlations and the horizontal position of the target element in the grid view according to the first correlation and the second correlation, and determining a horizontal position of the target element in the grid view according to the corresponding relation;
determining a third correlation between the target element and a third element and a fourth correlation between the target element and a fourth element, wherein the third and fourth correlations include the same or different of the attribute information, the third element is the element at the upper side of the target element and nearest to the target element in the elements displayed according to the grid view, the fourth element is the element at the lower side of the target element and nearest to the target element in the elements displayed according to the grid view;
searching the corresponding relation between the third and fourth correlations and the vertical position of the target element in the grid view according to the third correlation and the fourth correlation, and determining a vertical position of the target element in the grid view according to the corresponding relation.

The correlation between two elements (e.g. first, second, third or fourth correlation) is representative of the similarity or of the difference between the attribute information of the elements. It is for example "the same" if the attribute information of both elements are the same or "different" otherwise.

Optionally, determining the first correlation and the second correlations includes:
determining that the attribute information of the target element and the attribute information of the first element are different when the attribute information of the first element is null;
determining that the attribute information of the target element and the attribute information of the second element are different when the attribute information of the second element is null;
and determining the third correlation of the target element and the third element and the fourth correlation of the target element and the fourth element includes:
determining that the attribute information of the target element and the attribute information of the third element are different when the attribute information of the third element is null;
determining that the attribute information of the target element and the attribute information of the fourth element are different when the attribute information of the fourth element is null.

Optionally, the step of determining the first correlation and the second correlation includes:
searching a preset first correlation information, the first correlation information being used for indicating whether the attribute information of the target element and the attribute information of the first element are the same, and whether the attribute information of the target element and the attribute information of the second element are the same;
determining the first correlation and the second correlation according to the first correlation information; and ;
the step of determining the third correlation and the fourth correlation includes:
searching a preset second correlation information, the second correlation information being used for indicating whether the attribute information of the target element and the attribute information of the third element are the same, and whether the attribute information of the target element and the attribute information of the fourth element are the same;
determining the third correlation of the target element and the third element and the fourth correlation of the target element and the fourth element according to the second correlation information.

Optionally, the step of searching the background pattern configuration file according to the position of the target element in the grid view and determining the background pattern information corresponding to the target element includes:
determining the background pattern configuration file corresponding to the target element, the background pattern configuration file including the corresponding relation of each position in the grid view and the background pattern information of each position;
searching the background pattern configuration file according to the position of the target element in the grid view, and determining the background pattern information corresponding to the target element.

In a second aspect, a background display device is provided, the device including:
a position determining module configured for determining a position of a target element in a grid view according to attribute information of the target element and attribute information of adjacent elements, the target element being one of elements displayed according to the grid view;
a background determining module, configured for searching a background pattern configuration file according to the position of the target element in the grid view, and determining background pattern information corresponding to the target element; and
a background display module configured for displaying a background pattern of the target element according to the background pattern information.

Optionally, the position determining module includes:
a first correlation determining unit configured to determine a first correlation between the target element and a first element and a second correlation between the target element and a second element, wherein the first and second correlations include the same or different of attribute information, the first element is the element at the left side of the target element and nearest to the target element in the elements displayed according to the grid view, the second element is the element at the right side of the target element and nearest to the target element in the elements displayed according to the grid view;
a horizontal position determining unit configured to search the corresponding relation between the first and second correlations and the horizontal position of the target element in the grid view according to the first correlation and the second correlation and to determine the horizontal position of the target element in the grid view according to the corresponding relation;
a second correlation determining unit configured to determine a third correlation between the target element and a third element and a fourth correlation between the target element and a fourth element, wherein the third and fourth correlations include the same or different of attribute information, the third element is the element at the upper side of the target element and nearest to the target element in the elements displayed according to the grid view, the fourth element is the element at the lower side of the target element and nearest to the target element in the elements displayed according to the grid view ; and
a vertical position determining unit configured to search the corresponding relation between the third and fourth correlations and the vertical position of the target element in the grid view according to the third correlation and the fourth correlation, and to determine a vertical position of the target element in the grid view according to the corresponding relation;
wherein the attribute includes type and background label, the background label being used for indicating the background pattern configuration file corresponding to each element.

Optionally, the first correlation determining unit includes:
a first determining sub-unit used for determining that the attribute information of the target element and the attribute information of the first element are different when the attribute information of the first element is null;
a second determining sub-unit used for determining that the attribute information of the target element and the attribute information of the second element are different when the attribute information of the second element is null;
the second correlation determining unit includes:
a third determining sub-unit used for determining that the attribute information of the target element and the attribute information of the third element are different when the attribute information of the third element is null;
a fourth determining sub-unit used for determining that the attribute information of the target element and the attribute information of the fourth element are different when the attribute information of the fourth element is null.

Optionally, the first correlation determining unit includes:
a first searching sub-unit used for searching a preset first correlation information, the first correlation information being used for indicating whether the attribute information of the target element and the attribute information of the first element are the same, and whether the attribute information of the target element and the attribute information of the second element are the same;
a fifth determining sub-unit used for determining the first correlation and the second correlation according to the first correlation information;
the second correlation determining unit includes:
a second searching sub-unit used for searching a preset second correlation information, the second correlation information being used for indicating whether the attribute information of the target element and the attribute information of the third element are the same, and whether the attribute information of the target element and the attribute information of the fourth element are the same;
a sixth determining sub-unit used for determining the third correlation and the fourth correlation according to the second correlation information.

Optionally, the background determining module includes:
a configuration file determining unit used for determining the background pattern configuration file corresponding to the target element, the background pattern configuration file including the corresponding relation of each position in the grid view and the background pattern information of each position; and
a background determining unit used for searching the background pattern configuration file according to the position of the target element in the grid view, and determining the background pattern information corresponding to the target element.

In a third aspect, an electronic device is provided, the electronic device including:
a processor; and
a memory for storing instructions executable by the processor;
wherein the processor is configured for:
determining a position of a target element in a grid view according to attribute information of the target element and attribute information of adjacent elements, the target element being one of elements displayed according to the grid view;
searching a background pattern configuration file according to the position of the target element in the grid view, and determining background pattern information corresponding to the target element; and
displaying a background pattern of the target element according to the background pattern information.

In one embodiment, the steps of the background display method are determined by computer program instructions.

Consequently, in a fourth aspect, there is provided a computer program which, when being executed on a processor of a device, performs any one of the above methods.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the disclosure have beneficial effects hereinbelow.

By determining the position of the target element in the grid view according to the attribute information of the target element and adjacent elements, determining the background pattern information corresponding to the target element according to the position of the target element in the grid view and displaying the background pattern, the background pattern of the target element being determined by the position of the target element in the grid view, the developer only needs to designate the background pattern information for each position of the grid view instead of designating the background pattern information for each element, which may automatically recognize position of each element in the linear layout and display the background pattern corresponding to the position. As a result, the workload of the developer is reduced and the problem in the related art that the developer needs to designate corresponding background pattern for each element in the grid view and thus consumes much human labor is solved. The developing period is shortened, and the developing and maintaining cost is reduced while an aesthetic and vivid interface is obtained.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a background display method according to an exemplary embodiment;
Fig. 2 is a flow chart of a background display method according to another exemplary embodiment;
Fig. 3 is a schematic diagram of a grid view displaying according to another exemplary embodiment;
Fig. 4 is a schematic diagram of another grid view displaying according to another exemplary embodiment;
Fig. 5 is a flow chart of a background display method according to an exemplary embodiment;
Fig. 6 is a schematic diagram of a grid view displaying according to an exemplary embodiment;
Fig. 7 is a schematic diagram of a background display device according to an exemplary embodiment;
Fig. 8 is a schematic diagram of a background display device according to another exemplary embodiment; and
Fig. 9 is a block diagram of an electronic device according to an exemplary embodiment.

### DETAILED DESCRIPTION

The exemplary embodiments are illustrated hereinafter in detail, examples of which are illustrated in the accompanying drawings. When the following description relates to the accompanying drawings, unless otherwise indicated, the same numerals in different figures indicate the same or like elements. The described implementations illustrated in the following exemplary embodiments do not represent all implementations consistent with the present disclosure. Rather, they are only examples of apparatuses and methods consistent with the appended claims and aspects of the present disclosure.

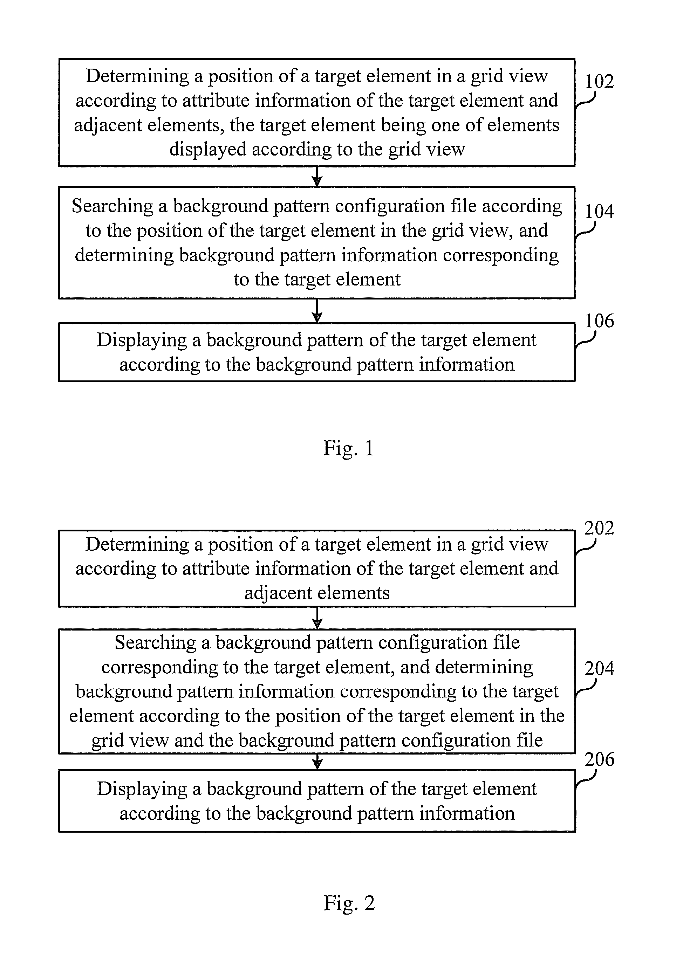

Fig. 1 is a flow chart of a background display method according to an exemplary embodiment. As shown in Fig. 1, the background display method may be used in an electronic device for displaying a background pattern of elements in a list view. The electronic device may be a smart phone, a tablet computer, a television, an e-book reader or other smart devices. The background display method may include the following steps.

In step 102, a position of a target element in a grid view is determined according to attribute information of the target element and attribute information of adjacent elements, the target element is one of elements displayed according to the grid view;

wherein, the position of the target element in the grid view includes: the arranging position of the target element in all elements included in the grid view; or, for a part of sub-lists in the grid view, the position of the target element in the grid view may include: the arranging position of the target element in each elements in the sub-list.

In step 104, a background pattern configuration file is searched according to the position of the target element in the grid view, and background pattern information corresponding to the target element is determined, wherein the background pattern configuration file includes a corresponding relation between each position of the grid view and the background pattern information of each position. It should be noted that each background pattern configuration file includes an ID, and all the elements in a grid view may correspond to a same background pattern configuration file or may correspond to different background configuration files. For example, every ten elements may correspond to one background configuration file which is different from others.

In step 106, a background pattern of the target element is displayed according to the background pattern information.

The background pattern information is information used for indicating corresponding background pattern, such as a label of the corresponding background pattern and a storing position of the background pattern, etc.

Being limited by the size of an electronic device screen, the number of positions in the grid view is limited, the developer only needs to designate background pattern information for each position of the grid view, instead of designating the background pattern information for each element in the grid view, thereby reducing workload of the developer.

To sum up, in the background display method of the exemplary embodiment, by determining the position of the target element in the grid view according to the attribute information of the target element and the attribution information of adjacent elements, determining the background pattern information corresponding to the target element according to the position of the target element in the grid view and displaying the background pattern, the background pattern of the target element being determined by the position of the target element in the grid view, the developer only needs to designate the background pattern information for each position of the grid view, instead of designating the background pattern information for each element. As a result, the workload of the developer is reduced, and the problem in the related art that the developer needs to designate corresponding background pattern for each element in the grid view and thus consumes much human labor is solved. The developing period is shortened, and the developing and maintaining cost is reduced while an aesthetic and vivid interface is obtained.

Fig. 2 is a flow chart of a background display method according to an exemplary embodiment. As shown in Fig. 2, the background display method may be used in an electronic device for displaying the background pattern of the elements in the grid view. The electronic device may be a smart phone, a tablet computer, a television, an e-book reader or other smart devices. The background display method may include the following steps.

In step 202, a position of a target element in a grid view is determined according to attribute information of the target element and adjacent elements wherein, the target element may be one of elements displayed according to the grid view. Each of the elements corresponds to its own attribute information, the attribute includes type and background label, the background label is used to indicate the background pattern configuration file corresponding to each element; the electronic device may obtain the type of the target element via an adapter.

The position of the target element in the grid view includes a horizontal position and a vertical position.

When determining the horizontal position of the target element in the grid view, the electronic device determines a first correlation between the target element and a first element and a second correlation between the target element and a second element, the first and second correlations include the same or different of the attribute information. The first element is the element at the left side of the target element and nearest to the target element in the elements displayed according to the grid view, and the second element is the element at the right side of the target element and nearest to the target element in the elements displayed according to the grid view.

The step of determining the position of the target element in the grid view according to the attribute information of the target element and the attribute information of adjacent elements includes: if the attribute information of the first element and the attribute information of the target element are the same, the correlation is "the same"; if the attribute information of the first element and the attribute information of the target element are different, the first correlation of the first element and the target element is "different". The same attribute information herein refers to that the target element and the first element have the same type and background label; if any one of the type and background label is different, it may be considered that the attribute information of the target element and the attribute information of the first element are different. For the second correlation of the second element and the target element, the determining method is similar. Particularly, if there is no first element before the current element, the attribute information of the first element is null, or it is not capable of obtaining the attribute information of the first element. When the attribute information of the first element is null, it may be determined that the attribute information of the target element is different from the attribute information of the first element that does not actually exist, that is, the first correlation of the target element and the first element is "different". When the attribute information of the second element is null, there is no element after the target element; as a result, it is determined that the attribute information of the target element is different from the attribute information of the second element that does not exist actually.

Afterwards, the electronic device searches the corresponding relation between the first and second correlations and the horizontal position of the target element in the grid view according to the first correlation and the second correlation, and determines a horizontal position of the target element in the grid view according to the corresponding relation.

When determining the vertical position of the target element in the grid view, the electronic device determines a third correlation between the target element and a third element and a fourth correlation between the target element and a fourth element, and the third and fourth correlation include the same or different of the attribute information. The third element is the element at the upper side of the target element and nearest to the target element in the elements displayed according to the grid view. The fourth element is the element at the lower side of the target element and nearest to the target element in the elements displayed according to the grid view.

The method for determining the third correlation and the fourth correlation is similar with the method for determining the first correlation and the second correlation, which is not illustrated herein for concise purpose.

Afterwards, the electronic device searches the corresponding relation between the third and fourth correlations and the vertical position of the target element in the grid view according to the third correlation and the fourth correlation, and determines the vertical position of the target element in the grid view according to the corresponding relation.

For example, if the electronic device is a smart phone, and the elements are icons displayed according to grid view in the smart phone, the icons are displayed in a Z-type order from left to right and from top to bottom, namely, the icons are numbered one by one from the first icon in the first line to right in the grid view, and when the last icon in the line is numbered, the first icon in the next line is jumped to, for continue numbering.

The icons included in the grid view may be divided into different types, for example, the grid view may include two types of icons, one type is operable icons such as startup icons of applications, the other type is un-operable icons such as static displayed images. The attribute information of each icon includes its own type and further includes the label of the corresponding background pattern configuration file.

When the smart phone determines the horizontal position of the currently displayed target icon in the grid view, first, the number curentPos of the target icon is obtained, then whether the type and the label of the corresponding background pattern configuration file of the icon numbered curentPos-1 in the grid view (that is the first icon) are the same as the type and the label of the corresponding background pattern configuration file of the target icon is detected, and the detecting result is obtained as the correlation of the target icon and the first icon. Similarly, the smart phone detects whether the type and the label of the corresponding background pattern configuration file of the icon numbered curentPos+1 in the grid view (that is the second icon) are the same as the type and label of the corresponding background pattern configuration file of the target icon, and the detecting result is obtained as the correlation of the target icon and the second icon.

It should be noted that only when the type and label of the corresponding background pattern configuration file are both the same, it can be determined that the correlation of the two icons is "the same"; if any one of the type and label of the corresponding background pattern configuration file is different, the correlation of the two icons is "different".

The smart phone may search the corresponding relation between the first and second correlations and the horizontal position of the target element in the grid view according to the first correlation of the target icon and the first icon and the second correlation of the target icon and the second icon, and may determine the horizontal position of the target icon in the grid view according to the corresponding relation.

It is assumed that the target icon has four types of horizontal positions in the grid view, which are M, F, L and S: M (middle) represents that the target icon is in a middle position of a plurality of icons of the same type displayed in a line and adjacent to each other in the grid view, F (first) represents that the target icon is in a first position of a plurality of icons of the same type displayed in a line and adjacent to each other in the grid view, L (last) represents that the target icon is in a last position of a plurality of icons of the same type displayed in a line and adjacent to each other in the grid view, and S (single) represents that the target icon has no adjacent icons located at left or right and having the same type in the grid view. The relation between the correlation of the target icon and the first icon, the correlation of the target icon and the second icon and the horizontal position of the target icon is shown in Table 1 hereinbelow:

**Table 1**

| with first icon | with second icon | horizontal position of target icon |
|---|---|---|
| same | same | M |
| same | different | L |
| different | same | F |
| different | different | S |

In Table 1, the first column represents the correlation of the target icon and the first icon, the second column represents the correlation of the target icon and the second icon, and the third column represents the corresponding horizontal position of the target element according to the correlation of the target icon and the first icon and the correlation of the target icon and the second icon.

Similar with the method for determining the horizontal position, when the smart phone determines the vertical position of the currently displayed target icon in the grid view, first, the number curentPos of the target icon is obtained, then whether the type and the label of the corresponding background pattern configuration file of the icon numbered curentPos-numcols (numcols is total amount of the column of the grid view) in the grid view (that is the third icon) are the same as the type and the label of the corresponding background pattern configuration file of the target icon is detected, and the detecting result is obtained as the correlation of the target icon and the third icon. Similarly, the smart phone detects whether the type and the label of the corresponding background pattern configuration file of the icon numbered curentPos+numcols in the grid view (that is the fourth icon) are the same as the type and label of the corresponding background pattern configuration file of the target icon, and the detecting result is obtained as the correlation of the target icon and the fourth icon.

The smart phone may search the corresponding relation between the correlation and the vertical position of the target icon in the grid view according to the correlation of the target icon and the third icon and the correlation of the target icon and the fourth icon, to determine the vertical position of the target icon in the grid view.

Correspondingly, it is assumed that the target icon has four types of vertical positions in the grid view, which are M, F, L and S: M (middle) represents that the target icon is in a middle position of a plurality of icons of the same type displayed in a line and adjacent to each other in the grid view, F (first) represents that the target icon is in a first position of a plurality of icons of the same type displayed in a line and adjacent to each other in the grid view, L (last) represents that the target icon is in a last position of a plurality of icons of the same type displayed in a line and adjacent to each other in the grid view, and S (single) represents that the target icon has no adjacent icons located at left or right and having the same type in the grid view. The relation between the correlation of the target icon and the third icon, the correlation of the target icon and the fourth icon and the vertical position of the target icon is shown in Table 2 hereinbelow:

**Table 2**

| with third icon | with fourth icon | vertical position of target element |
|---|---|---|
| same | same | M |
| same | different | L |
| different | same | F |
| different | different | S |

In Table 2, the first column represents the correlation of the target icon and the third icon, the second column represents the correlation of the target icon and the fourth icon, and the third column represents the corresponding vertical position of the target element according to the correlation of the target icon and the third icon and the correlation of the target icon and the fourth icon.

It should be noted that when the target icon is in the first column in the grid view, no corresponding first icon exists, then by default the attribute information of the target icon and the attribute information of the first icon are different. When the target element is in the last column of the grid view, no corresponding second icon exists, then by default the attribute information of the target element and the attribute information of the second icon are different. Similarly, when the target icon is in the first line of the grid view, no corresponding third icon exists, then by default the attribute information of the target icon and the attribute information of the third icon are different. When the target element is in the last line of the grid view, no corresponding fourth icon exists, then by default the attribute information of the target element and the attribute information of the fourth icon are different.

The electronic device may first determine the line number of the target element in the grid view, and then determine whether the target element is in the first or last line of the grid view according to the line number of the target element and the total line number of the grid view. Similarly, the electronic device may first determine the column number of the target element in the grid view, and then determine whether the target element is in the first or last column of the grid view according to the column number of the target element and the total column number of the grid view.

When determining the line number of the target element, the electronic device divides the curentPos of the target element by the numcols. The number obtained from the result omitting decimal point is the line number in which the target element is located. When determining the column number of the target element, the curentPos of the target element is divided by the numcols. Then the obtained remainder is the column number in which the target element is located.

In step 204, the background pattern configuration file corresponding to the target element is searched, and the background pattern information corresponding to the target element is determined according to the position of the target element in the grid view and the background pattern configuration file wherein, the background pattern configuration file includes the corresponding relation between the horizontal position and vertical position of the target element in the grid view and the background pattern information corresponding to the target element. For example, Table 3 hereinbelow is a typical content example of the background pattern configuration file. Each background pattern configuration file may have a unique ID label, and the background pattern information disposed at each position of the background pattern configuration file may be different from others.

If the elements in the grid view are the icons displayed according to a grid view in a smart phone, the two types of icons in the grid view may correspond to different background pattern configuration files, or may also correspond to the same background pattern configuration file, but the embodiment is not limited thereto.

In step 206, the background pattern of the target element is displayed according to the background pattern information.

The elements in the grid view may correspond to 16 types of different background patterns at most according to different horizontal positions and vertical positions. If the background pattern information is corresponding label of the background pattern, the corresponding relation between the horizontal position and vertical position of the target element in the grid view and the corresponding background pattern is shown in Table 3 below:

**Table 3**

| | | | | | | | | |
|---|---|---|---|---|---|---|---|---|
| horizontal position | M | M | M | M | F | F | F | F |
| vertical position | M | F | L | S | M | F | L | S |
| background pattern | pattern 1 | pattern 2 | pattern 3 | pattern 4 | pattern 5 | pattern 6 | pattern 7 | pattern 8 |
| horizontal position | L | L | L | L | S | S | S | S |
| vertical position | M | F | L | S | M | F | L | S |
| background pattern | pattern 9 | pattern 10 | pattern 11 | pattern 12 | pattern 13 | pattern 14 | pattern 15 | pattern 16 |

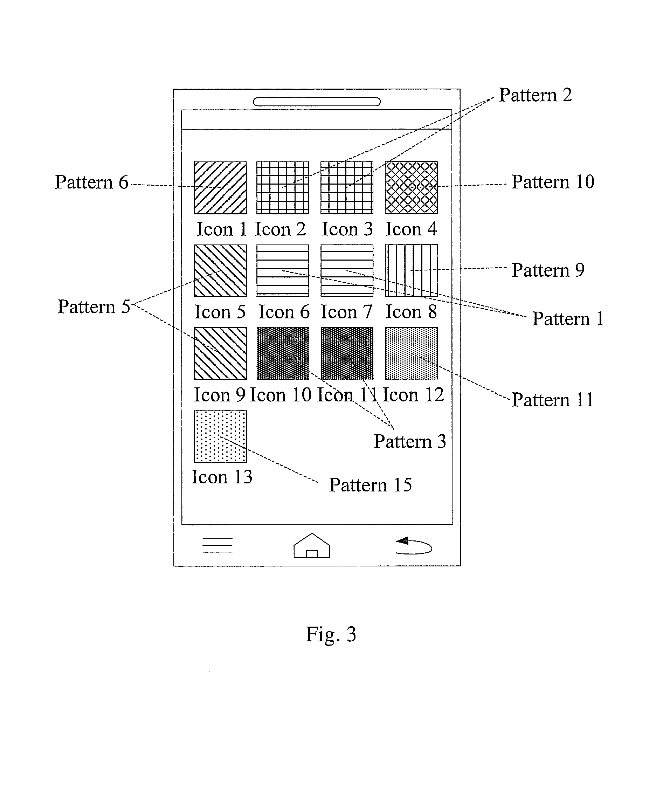

If the elements in the grid view are icons, as shown in Fig. 3, the icons displayed in the smart phone screen according to the grid view include thirteen icons which form four lines and four columns. The last line has only one icon. The type and corresponding background pattern configuration file of each icon are the same as those of other icons. The horizontal position of icon 1 is F, the vertical position thereof is F, the displayed background pattern is pattern 6 according to Table 3; the horizontal positions of icon 2 and icon 3 are M, the vertical positions thereof are F, the displayed background pattern is pattern 2 according to Table 3. By parity of reasoning, the background pattern of icon 4 is pattern 10, the background patterns of icons 5 and 8 are pattern 5, the background patterns of icons 6 and 7 are pattern 1, the background pattern of icon 8 is pattern 9, the background patterns of icons 10 and 11 are pattern 3, the background pattern of icon 12 is pattern 11, and the background pattern of icon 13 is pattern 15.

The number of positions in the grid view is limited (for example, the above solution of the disclosure has only 16 different positions). The developer only needs to designate the background pattern information for each position in the grid view instead of designating background pattern information for each element in the grid view, and as a result, the workload of the developer is reduced.

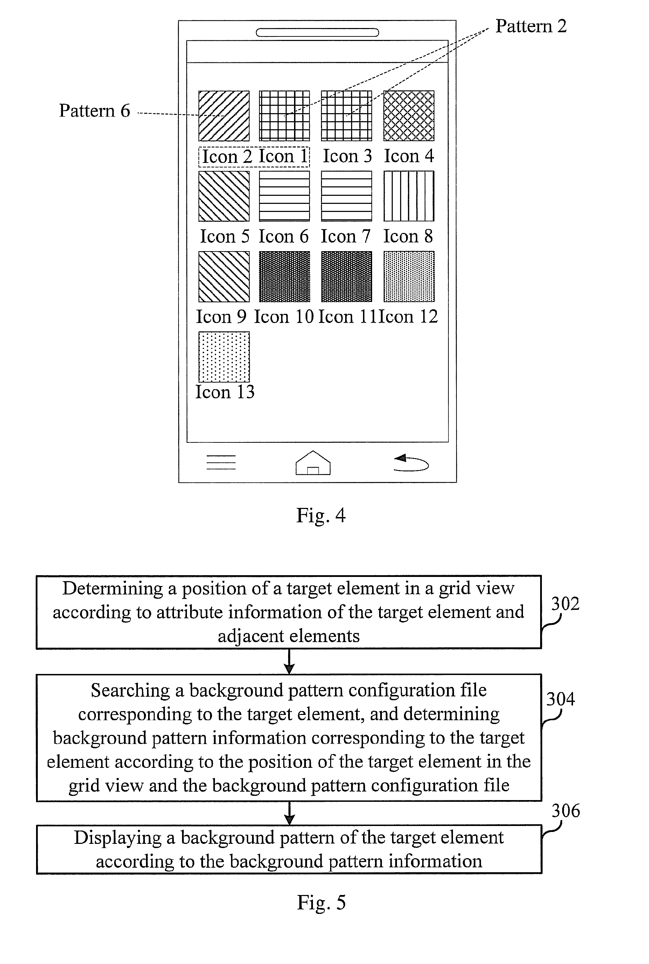

When the element in the grid view changes, for example, under some conditions the user may define the positions of the elements by himself or herself, as shown in Fig. 4, the horizontal position of icon 2 is F, the vertical position thereof is F, the displayed background pattern is pattern 6 according to Table 3; the horizontal positions of icon 1 and icon 3 are M, the vertical positions thereof are F, the displayed background pattern is pattern 2 according to Table 3. By parity of reasoning, the background pattern of icon 4 is pattern 10, the background patterns of icons 5 and 8 are pattern 5, the background patterns of icons 6 and 7 are pattern 1, the background pattern of icon 8 is pattern 9, the background patterns of icon 10 and icon 11 are pattern 3, the background pattern of icon 12 is pattern 11, and the background pattern of icon 13 is pattern 15.

Comparing Fig. 3 with Fig. 4, it can be seen that when the element position changes, the corresponding background pattern changes therewith, thereby ensuring that the background pattern in the grid view does not change in whole when the element position changes, thereby preventing from breaking the aesthetics of the grid view, and improving the user experience.

To sum up, in the background display method of the exemplary embodiment, by determining the position of the target element in the grid view according to the attribute information of the target element and the attribution information of adjacent elements, determining the background pattern information corresponding to the target element according to the position of the target element in the grid view and displaying the background pattern, the background pattern of the target element is determined by the position of the target element in the grid view. The developer thus only needs to designate the background pattern information for each position of the grid view, instead of designating the background pattern information for each element. As a result, the workload of the developer is reduced, and the problem in the related art that the developer needs to designate corresponding background pattern for each element in the grid view and thus consumes much human labor is solved. The developing period is shortened, and the developing and maintaining cost is reduced while an aesthetic and vivid interface is obtained.

Fig. 5 is a flow chart of a background display method according to an exemplary embodiment. As shown in Fig. 5, the background display method may be used in an electronic device for displaying a background pattern of elements in a grid view. The electronic device may be a smart phone, a tablet computer, a television, an e-book reader or other smart devices. The background display method may include the following steps.

In step 302, a position of a target element in a grid view is determined according to attribute information of the target element and adjacent elements wherein, the target element may be one of elements displayed according to the grid view. Each of the elements corresponds to its own attribute information, respectively, the attribute includes type and background label, the background label being used to indicate the background pattern configuration file corresponding to each element; the electronic device may obtain the type of the target element via an adapter.

The position of the target element in the grid view includes a horizontal position and a vertical position.

When determining the horizontal position of the target element in the grid view, the electronic device determines the first correlation of the target element and a first element and the second correlation of the target element and a second element, the first and second correlations include the same or different of the attribute information. The first element is the element at the left side of the target element and nearest to the target element in the elements displayed according to the grid view. The second element is the element at the right side of the target element and nearest to the target element in the elements displayed according to the grid view. For example, if the attribute information of the first element and the attribute information of the target element are the same, the correlation is "the same". If there is no first element before the current element, the attribute information of the first element is null, or it is not capable of obtaining the attribute information of the first element, then by default the correlation is "different". The method for determining the second correlation is similar with the above.

Afterwards, the electronic device searches the corresponding relation between the first and second correlations and the horizontal position of the target element in the grid view according to the first correlation and the second correlation, and determines the horizontal position of the target element in the grid view according to the corresponding relation.

When the attribute information of the first element is null, there is no element before the target element, so it is determined that the attribute information of the target element is different from the attribute information of the first element that does not actually exist. When the attribute information of the second element is null, there is no element after the target element, and as a result, it is determined that the attribute information of the target element is different from the attribute information of the second element that does not exist actually.

When determining the vertical position of the target element in the grid view, the electronic device determines the third correlation of the target element and a third element and the fourth correlation of the target element and a fourth element, the third and fourth correlations include the same or different of the attribute information. The third element is the element at the upper side of the target element and nearest to the target element in the elements displayed according to the grid view. The fourth element is the element at the lower side of the target element and nearest to the target element in the elements displayed according to the grid view. For example, if the attribute information of the third element and the attribute information of the target element are the same, the correlation is "the same". If there is no third element before the current element, the attribute information of the third element is null, or it's not capable of obtaining the attribute information of the third element, it is defaulted that the correlation is "different". The method for determining the correlation of the fourth element and the target element is the same.

Afterwards, the electronic device searches the corresponding relation between the third and fourth correlations and the vertical position of the target element in the grid view according to the third correlation and the fourth correlation, and determines the vertical position of the target element in the grid view according to the corresponding relation.

When the attribute information of the third element is null, there is no element above the target element, as a result, it is determined that the attribute information of the target element is different from the attribute information of the third element that does not exist actually. When the attribute information of the fourth element is null, there is no element below the target element, as a result, it is determined that the attribute information of the target element is different from the attribute information of the fourth element that does not exist actually.

For example, if the electronic device is a smart phone, and the elements are icons displayed according to grid view in the smart phone, the icons are displayed in a Z-type order from left to right and from top to bottom, namely, the icons are numbered one by one from the first icon in the first line to right in the grid view, when the last icon in the line is numbered, the first icon in the next line is jumped to, for continue numbering.

The icons included in the grid view may be divided into different types, for example, the grid view may include two types of icons, one type is operable icons such as startup icons of applications, the other type is un-operable icons such as static displayed images. The attribute information of each icon includes its own type and further includes the label of the corresponding background pattern configuration file.

When the smart phone determines the horizontal position of the currently displayed target icon in the grid view, first, the number curentPos of the target icon is obtained, then whether the type and the label of the corresponding background pattern configuration file of the icon numbered curentPos-1 in the grid view (that is the first icon) are the same as the type and the label of the corresponding background pattern configuration file of the target icon is detected, and the detecting result is obtained as the correlation of the target icon and the first icon. Similarly, the smart phone detects whether the type and the label of the corresponding background pattern configuration file of the icon numbered curentPos+1 in the grid view (that is the second icon) are the same as the type and label of the corresponding background pattern configuration file of the target icon, and the detecting result is obtained as the correlation of the target icon and the second icon.

It should be noted that only when the type and label of the corresponding background pattern configuration file are both the same, can it be determined that the correlation of the two icons is "the same". If any one of the type and label of the corresponding background pattern configuration file is different, the correlation of the two icons is "different".

The smart phone may search the corresponding relation between the first and second correlations and the horizontal position of the target element in the grid view according to the first correlation and the second correlation, and may determine the horizontal position of the target icon in the grid view.

It is assumed that the target icon has four types of horizontal positions in the grid view, which are M, F, L and S: M (middle) represents that the target icon is in a middle position of a plurality of icons of the same type displayed in a line and adjacent to each other in the grid view, F (first) represents that the target icon is in a first position of a plurality of icons of the same type displayed in a line and adjacent to each other in the grid view, L (last) represents that the target icon is in a last position of a plurality of icons of the same type displayed in a line and adjacent to each other in the grid view, and S (single) represents that the target icon has no adjacent icons located at left or right and having the same type in the grid view. The relation between the correlation of the target icon and the first icon, the correlation of the target icon and the second icon and the horizontal position of the target icon is shown in the above Table 1.

In Table 1, the first column represents the correlation of the target icon and the first icon, the second column represents the correlation of the target icon and the second icon, and the third column represents the corresponding horizontal position of the target element according to the correlation of the target icon and the first icon and the correlation of the target icon and the second icon.

Similar with the method for determining the horizontal position, when the smart phone determines the vertical position of the currently displayed target icon in the grid view, first, the number curentPos of the target icon is obtained, then whether the type and the label of the corresponding background pattern configuration file of the icon numbered curentPos-numcols (numcols is total amount of the column of the grid view) in the grid view (that is the third icon) are the same as the type and the label of the corresponding background pattern configuration file of the target icon is detected, and the detecting result is obtained as the correlation of the target icon and the third icon. Similarly, the smart phone detects whether the type and the label of the corresponding background pattern configuration file of the icon numbered curentPos+numcols in the grid view (that is the fourth icon) are the same as the type and label of the corresponding background pattern configuration file of the target icon, and the detecting result is obtained as the correlation of the target icon and the fourth icon.

The smart phone may search the corresponding relation between the correlation and the vertical position of the target icon in the grid view according to the correlation of the target icon and the third icon and the correlation of the target icon and the fourth icon, to determine the vertical position of the target icon in the grid view.

Correspondingly, it is assumed that the target icon has four types of vertical positions in the grid view, which are M, F, L and S: M (middle) represents that the target icon is in a middle position of a plurality of icons of the same type displayed in a line and adjacent to each other in the grid view, F (first) represents that the target icon is in a first position of a plurality of icons of the same type displayed in a line and adjacent to each other in the grid view, L (last) represents that the target icon is in a last position of a plurality of icons of the same type displayed in a line and adjacent to each other in the grid view, and S (single) represents that the target icon has no adjacent icons located at left or right and having the same type in the grid view. The relation between the correlation of the target icon and the third icon, the correlation of the target icon and the fourth icon and the vertical position of the target icon is shown in the above Table 2.

In Table 2, the first column represents the correlation of the target icon and the third icon, the second column represents the correlation of the target icon and the fourth icon, and the third column represents the corresponding vertical position of the target element according to the correlation of the target icon and the third icon and the correlation of the target icon and the fourth icon.

It should be noted that when the target icon is in the first column in the grid view, no corresponding first icon exists, then by default the attribute information of the target icon and the attribution information of the first icon are different. When the target element is in the last column of the grid view, no corresponding second icon exists, then by default the attribute information of the target element and the attribution information of the second icon are different. Similarly, when the target icon is in the first line of the grid view, no corresponding third icon exists, then by default the attribute information of the target icon and the attribution information of the third icon are different. When the target element is in the last line of the grid view, no corresponding fourth icons exists, then by default the attribute information of the target element and the attribution information of the fourth icon are different.

The electronic device may first determine the line number of the target element in the grid view, and then determine whether the target element is in the first or last line of the grid view according to the line number of the target element and the total line number of the grid view; similarly, the electronic device may also first determine the column number of the target element in the grid view, and then determine whether the target element is in the first or last column of the grid view according to the column number of the target element and the total column number of the grid view.

When determining the line number of the target element, the electronic device divides the curentPos of the target element by the numcols, the number obtained from the result omitting decimal point is the line number in which the target element is located; when determining the column number of the target element, the curentPos of the target element is divided by the numcols, then the obtained remainder is the column number in which the target element is located.

In step 304, the background pattern configuration file corresponding to the target element is searched, and the background pattern information corresponding to the target element is determined according to the position of the target element in the grid view and the background pattern configuration file wherein, the background pattern configuration file includes the corresponding relation between the horizontal position and vertical position of the target element in the grid view and the background pattern information corresponding to the target element. For example, above Table 3 is a typical content example of the background pattern configuration file. Each background pattern configuration file may have a unique ID label, and the background pattern information disposed at each position of the background pattern configuration file may be different from others.

If the elements in the grid view are the icons displayed according to a grid view in a smart phone, the two types of icons in the grid view may correspond to different background pattern configuration files, or may also correspond to the same background pattern configuration file, but the embodiment is not limited thereto.

In step 306, the background pattern of the target element is displayed according to the background pattern information.

The elements in the grid view may correspond to 16 types of different background patterns at most according to different horizontal positions and vertical positions. If the background pattern information is corresponding label of the background pattern, the corresponding relation between the horizontal position and vertical position of the target element in the grid view and the background pattern is shown in the above Table 3.

If the elements in the grid view are icons, as shown in Fig. 3, the icons displayed in the smart phone screen according to the grid view include thirteen icons which form four lines and four columns. The last line has only one icon. The type and corresponding background pattern configuration file of each icon are the same as those of other icons. The horizontal position of icon 1 is F, the vertical position thereof is F, the displayed background pattern is pattern 6 according to Table 3; the horizontal positions of icon 2 and icon 3 are M, the vertical positions thereof are F, the displayed background pattern is pattern 2 according to Table 3. By parity of reasoning, the background pattern of icon 4 is pattern 10, the background patterns of icons 5 and 8 are pattern 5, the background patterns of icons 6 and 7 are pattern 1, the background pattern of icon 8 is pattern 9, the background patterns of icons 10 and 11 are pattern 3, the background pattern of icon 12 is pattern 11, and the background pattern of icon 13 is pattern 15.

The number of positions in the grid view is limited (for example, the above solution of the disclosure has only 16 different positions). The developer thus only needs to designate the background pattern information for each position in the grid view instead of designating background pattern information for each element in the grid view, and as a result, the workload of the developer is reduced.

When the element in the grid view changes, for example, under some conditions the user may define the positions of the elements by himself or herself, as shown in Fig. 4, the horizontal position of icon 2 is F, the vertical position thereof is F, the displayed background pattern is pattern 6 according to Table 3; the horizontal positions of icon 1 and icon 3 are M, the vertical positions thereof are F, the displayed background pattern is pattern 2 according to Table 3. By parity of reasoning, the background pattern of icon 4 is pattern 10, the background patterns of icons 5 and 8 are pattern 5, the background patterns of icons 6 and 7 are pattern 1, the background pattern of icon 8 is pattern 9, the background patterns of icon 10 and icon 11 are pattern 3, the background pattern of icon 12 is pattern 11, and the background pattern of icon 13 is pattern 15.

Comparing Fig. 3 with Fig. 4, it can be seen that when the element position changes, the corresponding background pattern changes therewith, thereby ensuring that the background pattern in the grid view does not change in whole when the element position changes, thereby preventing from breaking the aesthetics of the grid view, and improving the user experience.

When determining the horizontal position of the target element in the grid view, the electronic device may search a predetermined first correlation information, the first correlation information is used to indicate whether the attribute information of the target element and the attribute information of the first element are the same, and whether the attribute information of the target element and the attribute information of the second element are the same. The electronic device determines the correlation of the target element and the first element and the correlation of the target element and the second element according to the first correlation information. Similarly, when determining the correlation of the target element and the third element and the correlation of the target element and the fourth element, the electronic device may further search a predetermined second correlation information, the second correlation information is used to indicate whether the attribute information of the target element and the attribute information of the third element are the same, and whether the attribute information of the target element and the attribute information of the fourth element are the same. The electronic device determines the correlation of the target element and the third element and the correlation of the target element and the fourth element according to the second correlation information.

The electronic device may preset and store the correlations of the target element and the first element, the target element and second element, the target element and third element, and the target element and fourth element. When determining the horizontal position and vertical position of the target element in the grid view, the electronic device directly searches the stored correlation of the attribute information between the target element and the first element, the target element and the second element, the target element and the third element, and the target element and the fourth element, and determines the horizontal position and vertical position of the target element in the grid view according to the searched result and Table 1 or Table 2.

The electronic device may further display a setting interface to the user, determining the correlations of the target element and the corresponding first element, the second element, the third element and the fourth element according to the selection operation of the user in the setting interface. For example, the electronic device may provide the user with an open interface for the user to select whether the attribute information of each target element and the attribute information of its front element, latter element, upper element and lower element are the same or not, namely, the user may define the value corresponding to each target element in Table 1 and Table 2 by himself or herself, thereby making the background pattern of each element displayed in the grid view settable according to the user's requirement.

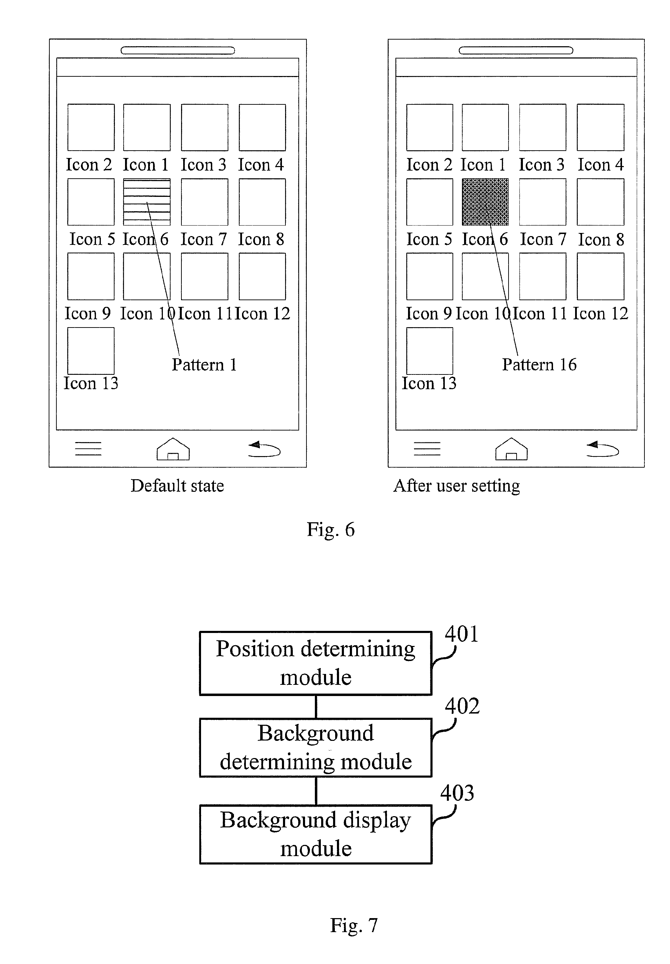

If the elements are icons displayed according to the grid view in the smart phone, the electronic device provides a correlation setting interface of the attribute information of each icon, in which the user may set whether a display state of each element is the same or different as compared with the display states of its front element, its latter element, its upper element and its lower element. As shown in Fig. 6, under a default state, the attribute information of icon 6 is the same as the attribute information of icon 5, icon 7, icon 2 and icon 10, then, the background pattern of the icon 6 may be determined to be pattern 1 according to Table 3. When the user modifies, in the correlation setting interface, the relations between the attribute information of icon 6 and the attribute information of icon 5, icon 7, icon 2 and icon 10 to be different, the displayed background pattern of icon 6 may be determined to be pattern 16 according to Table 3.

To sum up, in the background display method of the exemplary embodiment, by determining the position of the target element in the grid view according to the attribute information of the target element and the attribution information of adjacent elements, determining the background pattern information corresponding to the target element according to the position of the target element in the grid view and displaying the background pattern, the background pattern of the target element is determined by the position of the target element in the grid view. The developer thus only needs to designate the background pattern information for each position of the grid view, instead of designating the background pattern information for each element, and as a result, the workload of the developer is reduced, the problem in the related art that the developer needs to designate corresponding background pattern for each element in the grid view and thus consumes much human labor is solved. The developing period is shortened, and the developing and maintaining cost is reduced while an aesthetic and vivid interface is obtained.

Fig. 7 is a schematic diagram of a background display device according to an exemplary embodiment. As shown in Fig. 7, the background display device may be configured to execute the background display method shown in Fig. 1, Fig. 2 or Fig. 5. The background display device may include: a position determining module 401, a background determining module 402 and a background display module 403.

The position determining module 401 is configured for determining a position of a target element in a grid view according to attribute information of the target element and attribute information of attribute information of adjacent elements, the target element is one of elements displayed according to the grid view.

The background determining module 402 is configured for searching a background pattern configuration file according to the position of the target element in the grid view, and determining background pattern information corresponding to the target element.

The background display module 403 is configured for displaying a background pattern of the target element according to the background pattern information.

To sum up, in the background display device of the exemplary embodiment, by determining the position of the target element in the grid view according to the attribute information of the target element and the attribution information of adjacent elements, determining the background pattern information corresponding to the target element according to the position of the target element in the grid view and displaying the background pattern, the background pattern of the target element is determined by the position of the target element in the grid view,. The developer only needs to designate the background pattern information for each position of the grid view, instead of designating the background pattern information for each element. As a result, the workload of the developer is reduced, the problem that the developer needs to designate corresponding background pattern for each element in the grid view and thus consumes much human labor is solved. The developing period is shortened, and the developing and maintaining cost is reduced while an aesthetic and vivid interface is obtained.

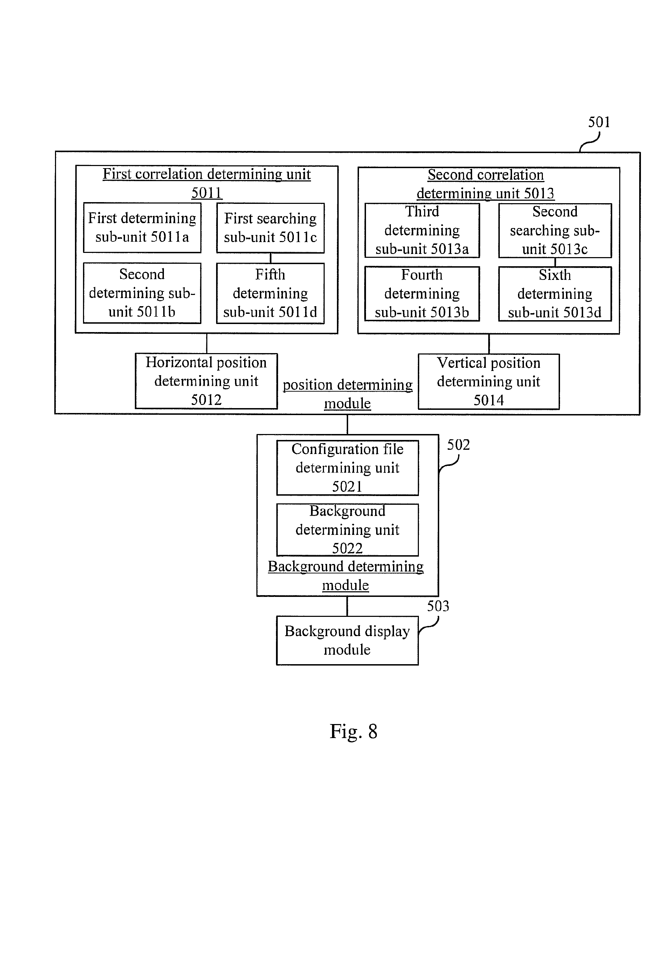

Fig. 8 is a schematic diagram of a background display device according to another exemplary embodiment. As shown in Fig. 8, the background display device may be configured to execute the background display method shown in Fig. 1, Fig. 2 or Fig. 5. The background display device may include: a position determining module 501, a background determining module 502 and a background display module 503.

The position determining module 501 is configured for determining a position of a target element in a grid view according to attribute information of the target element and attribute information of adjacent elements, the target element is one of elements displayed according to the grid view;

The background determining module 502 is configured for searching a background pattern configuration file according to the position of the target element in the grid view, and determining background pattern information corresponding to the target element;

The background display module 503 is configured for displaying a background pattern of the target element according to the background pattern information.

The position determining module 501 includes a first correlation determining unit 5011, a horizontal position determining unit 5012, a second correlation determining unit 5013 and a vertical position determining unit 5014.

The first correlation determining unit 5011 is configured for determining a first correlation between the target element and a first element and a second correlation between the target element and a second element, the first and second correlations include the same or different of attribute information. The first element is the element at the left side of the target element and nearest to the target element in the elements displayed according to the grid view, and the second element is the element at the right side of the target element and nearest to the target element in the elements displayed according to the grid view.

The horizontal position determining unit 5012 is configured for searching the corresponding relation between the first and second correlations and the horizontal position of the target element in the grid view according to the first correlation and the second correlation, to determine the horizontal position of the target element in the grid view.

The second correlation determining unit 5013 is configured for determining a third correlation between the target element and a third element and a fourth correlation between the target element and a fourth element, the third and fourth correlations include the same or different of attribute information. The third element is the element at the upper side of the target element and nearest to the target element in the elements. The fourth element is the element at the lower side of the target element and nearest to the target element in the elements.

The vertical position determining unit 5014 is configured for searching the corresponding relation between the third and fourth correlations and the vertical position of the target element in the grid view according to the third correlation and the fourth correlation, and for determining a vertical position of the target element in the grid view according to the corresponding relation.

The attribute includes type and background label, the background label is used for indicating the background pattern configuration file corresponding to each element.

The first correlation determining unit 5011 includes a first determining sub-unit 5011a and a second determining sub-unit 5011b.

The first determining sub-unit 5011a is configured for determining that the attribute information of the target element and the attribute information of the first element are different when the attribute information of the first element is null.

The second determining sub-unit 5011b is configured for determining that the attribute information of the target element and the attribute information of the second element are different when the attribute information of the second element is null.

The second correlation determining unit 5013 includes a third determining sub-unit 5013a and a fourth determining sub-unit 5013b.

The third determining sub-unit 5013a is configured for determining that the attribute information of the target element and the attribute information of the third element are different when the attribute information of the third element is null.

The fourth determining sub-unit 5013b is configured for determining that the attribute information of the target element and the attribute information of the fourth element are different when the attribute information of the fourth element is null.

The first correlation determining unit 5011 includes a first searching sub-unit 5011c and a fifth determining sub-unit 5011d.

The first searching sub-unit 5011c is configured for searching the preset first correlation information, the first correlation information is used for indicating whether the attribute information of the target element and the attribute information of the first element are the same, and whether the attribute information of the target element and the attribute information of the second element are the same;

The fifth determining sub-unit 5011d is configured for determining the correlation of the target element and the first element and the correlation of the target element and the second element according to the first correlation information.

The second correlation determining unit 5013 includes a second searching sub-unit 5013c and a sixth determining sub-unit 5013d.

The second searching sub-unit 5013c is configured for searching the preset second correlation information, the second correlation information is used for indicating whether the attribute information of the target element and the attribute information of the third element are the same, and whether the attribute information of the target element and the attribute information of the fourth element are the same.

The sixth determining sub-unit 5013d is configured for determining the correlation of the target element and the third element and the correlation of the target element and the fourth element according to the second correlation information.

The background determining module 502 includes a configuration file determining unit 5021 and a background determining unit 5022.

The configuration file determining unit 5021 is configured for determining the background pattern configuration file corresponding to the target element, the background pattern configuration file includes the corresponding relation of each position in the grid view and the background pattern information of each position.

The background determining unit 5022 is configured for searching the background pattern configuration file according to the position of the target element in the grid view, and determining the background pattern information corresponding to the target element.

To sum up, in the background display device of the exemplary embodiment, by determining the position of the target element in the grid view according to the attribute information of the target element and the attribute information of adjacent elements, determining the background pattern information corresponding to the target element according to the position of the target element in the grid view and displaying the background pattern, the background pattern of the target element is determined by the position of the target element in the grid view. The developer thus only needs to designate the background pattern information for each position of the grid view, instead of designating the background pattern information for each element, and as a result, the workload of the developer is reduced, the problem in the related art that the developer needs to designate corresponding background pattern for each element in the grid view and thus consumes much human labor is solved. The developing period is shortened, and the developing and maintaining cost is reduced while an aesthetic and vivid interface is obtained.

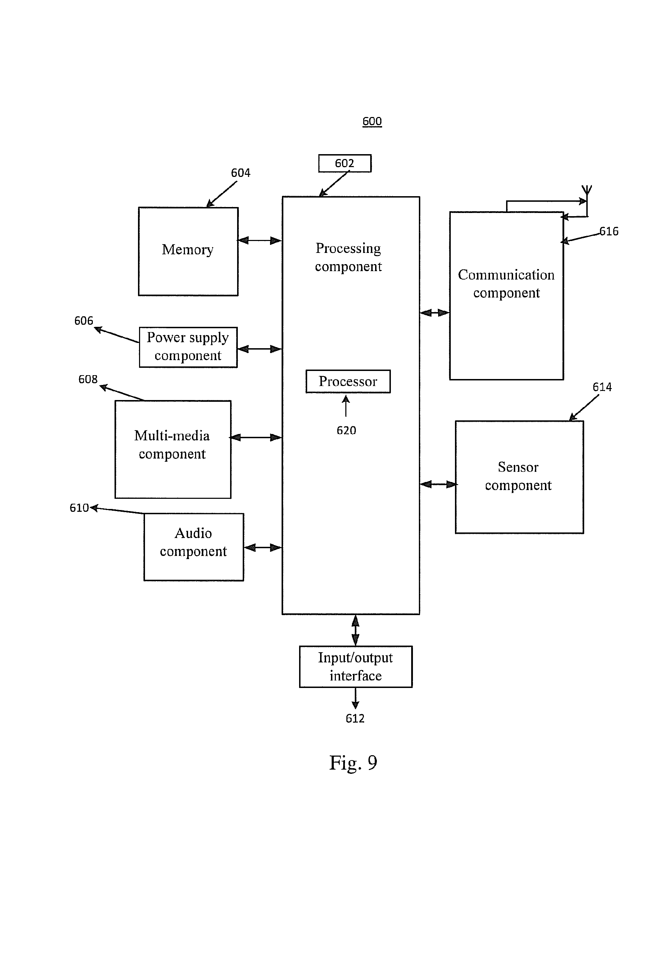

Fig. 9 is a block diagram of an electronic device 600 according to an exemplary embodiment. For example, the electronic device 600 may be a mobile phone, a computer, a digital broadcast terminal, a message sending and receiving device, a game control center, a flat computer device, a medical device, a fitness device, a personal digital assistance and so on.

As show in Fig. 9, the electronic device 600 may include one or more the following components: a processing component 602, a memory 604, a power supply component 606, a multi-media component 608, an audio component 610, an input/output (I/O) interface 612, a sensor component 614 and a communication component 616.

The processing component 602 usually controls the whole operation of the electronic device 600 such as operations relating to display, making call, digital communication, taking photos and recording. The processing component 602 may include one or more processors 620 to execute instructions to finish all or part steps of the above method. Besides, the processing component 602 may include one or more modules for facilitating the interaction between the processing component 602 and other components. For example, the processing component 602 may include a multi-media module to facilitate the interaction between the multi-media component 608 and the processing component 602.

The memory 604 is configured for storing various kinds of data to support the operation at the electronic device 600. The examples of the data may include any instructions for performing applications or methods at the electronic device 600, contact data, phone book data, messages, figures, videos and so on. The memory 604 may be any types of volatile or non-volatile storage devices or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or compact disk. The memory 604 further stores one or more modules, which are configured to be executed by the one or more processors 620 to finish all or part steps in the method shown in anyone of Fig. 1, Fig. 2 or Fig. 5.

The power supply component 606 provides power for components of the electronic device 600. The power supply component 606 may include a power supply management system, one or more power supplies, and other related components for generating, managing and distributing power for the electronic device 600.

The multi-media component 608 includes a screen which provides an output interface between the electronic device 600 and the user. In some embodiments, the screen may include a liquid crystal display (LCD) and a touch panel (TP). If the screen includes a touch panel, the screen may be realized to be a touch screen to receive input signals from the user. The touch panel includes one or more touch sensors to sense touch, slide and gestures on the touch panel. The touch sensor may not only sense the touch or slide boundary, but also detect the duration time and pressure of the touch or slide operation. In some embodiments, the multi-media component 608 includes a front camera and/or a back camera. When the electronic device 600 is in an operation mode, such as photo mode or video mode, the front camera and/or the back camera may receive outside multi-media data. Each of the front camera and back camera may be a fixed optical lens system or have the focal length and optical zoom ability.

The audio component 610 is configured for outputting and/or inputting audio signals. For example, the audio component 610 includes a microphone (MIC). When the electronic device 600 is in an operation mode such as a calling mode, a record mode and a voice recognition mode, the microphone is configured for receiving outside audio signals. The received audio signal may be further stored in the memory 604 or sent by the communication component 616. In some embodiments, the audio component 610 may further include a loudspeaker for outputting audio signals.

The I/O interface 612 may provide an interface between the processing component 602 and peripheral interface modules. The peripheral interface modules may be a keyboard, a click wheel, a button and so on. These buttons include but not limited to a homepage button, a volume button, a start button and a lock button.

The sensor component 614 includes one or more sensors for evaluating state of different aspects of the electronic device 600. For example, the sensor component 614 may detect the on/off state of the electronic device 600, and the relative locations of components, for example, the components are display and keypad of the electronic device 600. The sensor component 614 may further sense the position change of the electronic device 600 or the position change of component of the electronic device 600, whether the contact exists between the user and the electronic device 600, the orientation of the electronic device 600, the acceleration/deceleration of the electronic device 600, and the temperature change of the electronic device 600. The sensor component 614 may include a proximity sensor which is configured for detecting the existence of nearby substance when no physical contact exists. The sensor component 614 may further include a light sensor such as CMOS or CCD image sensor, for using in imaging applications. In some embodiments, the sensor component 614 further includes an accelerate sensor, a gyro sensor, a magnetic sensor, a pressure sensor or a temperature sensor.

The communication component 616 is configured for communicating between the electronic device 600 and other devices in wired or wireless manner. The electronic device 600 may be connected to wireless network based on communication standard such as wireless fidelity (WiFi), 2G or 3G or their combinations. In an exemplary embodiment, the communication component 616 receives broadcast signal or broadcast related information from outside broadcast management system via broadcast channel. In an exemplary embodiment, the communication component 616 further includes a near field communication (NFC) module to prompt short range communication. For example, the NFC module may be achieved based on radio frequency identification (RFID) technology, infrared data association (IrDA) technology, ultra-wide bandwidth (UWB) technology, Bluetooth (BT) technology and other technologies.

In exemplary embodiments, the electronic device 600 may be achieved by one or more of application specific integrated circuit (ASIC), digital signal processor (DSP), digital signal processor device (DSPD), programmable logic device (PLD), field programmable gate array (FPGA), controller, micro controller, micro-processor or other electronic elements, for executing the methods above.

In exemplary embodiments, a non-temporary computer readable storage medium including instructions is provided, such as the memory 604 including instructions; the instructions may be executed by the processor 620 of the electronic device 600 to finish the methods above. For example, the non-temporary computer readable storage medium may be ROM, random access memory (RAM), CD-ROM, magnetic tape, soft disk and optical data storage devices, etc.

After consideration of the specification and practice of the disclosed disclosure, those skilled in the art may readily conceive other embodiments of the disclosure. This application is intended to cover any variations, uses or adaptations of the disclosure. These variations, uses or adaptations follow general principles of the disclosure, and include undisclosed common knowledge or customary technical means in this art. The specification and embodiments are considered exemplary only, and the true scope and spirit of the disclosure are indicated by the claims.

It should be understood that, the present disclosure is not limited to the above described exact structure illustrated in the accompanying drawings, and may have various modifications and changes without departing from the scope thereof. The scope of the disclosure is limited only by the appended claims.

## Claims

1. A background display method, comprising:
determining (102) (202)( 302) a position of a target element in a grid view according to attribute information of the target element and attribute information of adjacent elements, the target element being one of elements displayed according to the grid view;
searching (104) (204)( 304) a background pattern configuration file according to the position of the target element in the grid view, and determining background pattern information corresponding to the target element; and
displaying (106)(206) (306)a background pattern of the target element according to the background pattern information.

2. The method according to claim 1, wherein the attribute information includes type and background label, the background label is used to indicate the background pattern configuration file corresponding to each element, and the step of determining a position of a target element in a grid view according to attribute information of the target element and attribute information of adjacent elements comprises:
determining a first correlation between the target element and a first element and a second correlation between the target element and a second element, wherein the first and second correlation include the same or different of the attribute information, the first element is the element at the left side of the target element and nearest to the target element in the elements displayed according to the grid view, the second element is the element at the right side of the target element and nearest to the target element in the elements displayed according to the grid view;
searching the corresponding relation between the first and second correlation and the horizontal position of the target element in the grid view according to the first correlation and the second correlation, and determining a horizontal position of the target element in the grid view according to the corresponding relation;
determining a third correlation between the target element and a third element and a fourth correlation between the target element and a fourth element, wherein the third and fourth correlations include the same or different of the attribute information, the third element is the element at the upper side of the target element and nearest to the target element in the elements displayed according to the grid view, the fourth element is the element at the lower side of the target element and nearest to the target element in the elements displayed according to the grid view;
searching the corresponding relation between the third and fourth correlations and the vertical position of the target element in the grid view according to the third correlation and the fourth correlation, and determining a vertical position of the target element in the grid view according to the corresponding relation.

3. The method according to claim 2, wherein:
determining the first correlation and the second correlation comprises:
determining that the attribute information of the target element and the attribute information of the first element are different when the attribute information of the first element is null,;
determining that the attribute information of the target element and the attribute information of the second element are different when the attribute information of the second element is null; and
determining the third correlation and the third element and the fourth correlation comprises:
determining that the attribute information of the target element and the attribute information of the third element are different when the attribute information of the third element is null;
determining that the attribute information of the target element and the attribute information of the fourth element are different when the attribute information of the fourth element is null.

4. The method according to claim 2, wherein :
determining the first correlation and the second correlation comprises:
searching a preset first correlation information, which is used for indicating whether the attribute information of the target element and the attribute information of the first element are the same, and whether the attribute information of the target element and the attribute information of the second element are the same;
determining the first correlation and the second correlation according to the first correlation information; and
determining the third correlation and the fourth correlation comprises:
searching a preset second correlation information, which is used for indicating whether the attribute information of the target element and the attribute information of the third element are the same, and whether the attribute information of the target element and the attribute information of the fourth element are the same;
determining the third correlation and the fourth correlation according to the second correlation information.

5. The method according to any of claims 1 to 4, wherein searching the background pattern configuration file according to the position of the target element in the grid view and determining the background pattern information corresponding to the target element comprises:
determining the background pattern configuration file corresponding to the target element, the background pattern configuration file including the corresponding relation of each position in the grid view and the background pattern information of each position; and
searching the background pattern configuration file according to the position of the target element in the grid view, and determining the background pattern information corresponding to the target element.

6. A background display device, comprising:
a position determining module (401) configured to determine a position of a target element in a grid view according to attribute information of the target element and attribute information of adjacent elements, the target element being one of elements displayed according to the grid view;
a background determining module (402) configured to search a background pattern configuration file according to the position of the target element in the grid view, and determine background pattern information corresponding to the target element; and
a background display module (403) configured to display a background pattern of the target element according to the background pattern information.

7. The device according to claim 6 wherein the position determining module comprises:
a first correlation determining unit (5011) configured to determine a first correlation between the target element and a first element and a second correlation between the target element and a second element, wherein the first and second correlations include the same or different of attribute information, the first element is the element at the left side of the target element and nearest to the target element in the elements displayed according to the grid view, and the second element is the element at the right side of the target element and nearest to the target element in the elements displayed according to the grid view;
a horizontal position determining unit (5012) configured to search the corresponding relation between the first and second correlation and the horizontal position of the target element in the grid view according to the first correlation and the second correlation, to determine the horizontal position of the target element in the grid view according to the corresponding relation;
a second correlation determining unit (5013) configured to determine a third correlation between the target element and a third element and a fourth correlation between the target element and a fourth element, wherein the third and fourth correlations include the same or different of attribute information, the third element is the element at the upper side of the target element and nearest to the target element in the elements displayed according to the grid view, and the fourth element is the element at the lower side of the target element and nearest to the target element in the elements displayed according to the grid view; and
a vertical position determining unit (5014) configured to search the corresponding relation between the third and fourth correlations and the vertical position of the target element in the grid view according to the third correlation and the fourth correlation, and to determine a vertical position of the target element in the grid view according to the corresponding relation;
wherein the attribute includes type and background label, the background label being used for indicating the background pattern configuration file corresponding to each element.

8. The device according to claim 7, the first correlation determining unit (5011) comprises:
a first determining sub-unit (5011a) is configured to determine that the attribute information of the target element and the attribute information of the first element are different when the attribute information of the first element is null; and
a second determining sub-unit (5011b) is configured to determine that the attribute information of the target element and the attribute information of the second element are different when the attribute information of the second element is null;
the second correlation determining unit (5013) comprises:
a third determining sub-unit (5013a) is configured to determine that the attribute information of the target element and the attribute information of the third element are different when the attribute information of the third element is null; and
a fourth determining sub-unit (5013b) configured to determine that the attribute information of the target element and the attribute information of the fourth element are different when the attribute information of the fourth element is null.

9. The device according to claim 7, the first correlation determining unit (5011) comprises:
a first searching sub-unit (5011c) is configured to search a preset first correlation information, which is used for indicating whether the attribute information of the target element and the attribute information of the first element are the same, and whether the attribute information of the target element and the attribute information of the second element are the same; and
a fifth determining sub-unit(5011d) is configured to determine the first correlation and the second correlation according to the first correlation information;
the second correlation determining unit (5013) comprises:
a second searching sub-unit (5013c) is configured to search a preset second correlation information, which is used for indicating whether the attribute information of the target element and the attribute information of the third element are the same, and whether the attribute information of the target element and the attribute information of the fourth element are the same; and
a sixth determining sub-unit (5013d) is configured to determine the third correlation and the fourth correlation according to the second correlation information.

10. The device according to any of claims 6 to 9, the background determining module (502) comprises:
a configuration file determining unit(5021) is configured to determine the background pattern configuration file corresponding to the target element, the background pattern configuration file including the corresponding relation of each position in the grid view and the background pattern information of each position; and
a background determining unit (5022) is configured to search the background pattern configuration file according to the position of the target element in the grid view, and determine the background pattern information corresponding to the target element.

11. An electronic device, comprising:
a processor; and
a memory for storing instructions executable by the processor;
wherein the processor is configured for:
determining a position of a target element in a grid view according to attribute information of the target element and attribute information of adjacent elements, the target element being one of elements displayed according to the grid view;
searching a background pattern configuration file according to the position of the target element in the grid view, and determining background pattern information corresponding to the target element; and
displaying a background pattern of the target element according to the background pattern information.

12. A computer program which, when being executed on a processor of a device, performs a method according to any one of claims 1 to 5.
